# EUROPÄISCHE PATENTSCHRIFT

(11) **EP 2 774 745 B1**
(45) Veröffentlichungstag und Bekanntmachung des Hinweises auf die Patenterteilung: **16.08.2017**
(21) Anmeldenummer: 14156337.9
(22) Anmeldetag: 24.02.2014
(51) Int. Cl.: B29C 65/02, B29K 101/12, B29K 105/06, B29C 65/06, B29C 65/08, B29C 65/14, B29C 65/16, B29C 65/18

(54) **Verfahren zum Fügen faserverstärkter thermoplastischer Kunststoffteile**
Method for joining fibre-reinforced thermoplastic parts
Procédé d'assemblage de pièces thermoplastiques renforcées de fibres

(30) Priorität: 08.03.2013 DE 102013204012
(43) Veröffentlichungstag der Anmeldung: 10.09.2014
(73) Patentinhaber: Bayerische Motoren Werke Aktiengesellschaft, 80809 München (DE)
(72) Erfinder: Mantei, Ingo, 80804 Muenchen (DE)

(56) Entgegenhaltungen:
- WO-A1-2012/101793
- WO-A1-2012/137554
- WO-A1-2012/156525
- DE-A1-102008 059 142
- JP-A- H09 164 595
- JP-A- S60 239 224
- JP-A- 2008 230 224
- MENGES G ET AL: "Auf dem Weg zu automatisierbaren FÃ 1/4 geverfahren", PLASTVERARBEITER,, Bd. 38, Nr. 12, 1. Dezember 1987 (1987-12-01), Seiten 41-47, XP001353408,

## Beschreibung

Die Erfindung betrifft ein Verfahren zum Fügen faserverstärkter Kunststoffteile, ein faserverstärktes thermoplastisches Halbzeug, ein Faserverbundbauteil, sowie die Verwendung eines Gebildes aus faserfreiem thermoplastischen Kunststoffmaterial zum Fügen von faserverstärkten thermoplastischen Kunststoffteilen mittels Schweißen.

Thermoplastische Kunststoffe sind etablierte Werkstoffe mit vielfältigen Anwendungsmöglichkeiten. Zum Fügen dieser Werkstoffe sind aufgrund der Schmelzbarkeit der Thermoplaste unterschiedliche Schweißverfahren anwendbar, die das Ausbilden einer dauerhaft stabilen, stoffschlüssigen Verbindung zwischen gefügten thermoplastischen Bauteilen erlauben. In zunehmendem Maße werden heut zu Tage faserverstärkte thermoplastische Kunststoffe eingesetzt, die gegenüber herkömmlichen, nicht faserverstärkten thermoplastischen Kunststoffen, eine höhere Festigkeit und damit verbesserte mechanische Stabilität und gegenüber metallischen Werkstoffen zudem ein geringeres Gewicht aufweisen, was gerade für Anwendungen in Leichtbauweise von Vorteil ist. Selbst bei Verwendung einer thermoplastischen Kunststoffmatrix in faserverstärkten Kunststoffen sind jedoch die für nicht faserverstärkte thermoplastische Kunststoffe bekannten Schweißverfahren nicht geeignet. Beispielsweise führt Ultraschallschweißen faserverstärkter thermoplastischer Kunststoffteile aufgrund der stark abrasiv wirkenden Fasern zu einem hohen Verschleiß der Schweißwerkzeuge. Zudem sind die Schweißnähte von geringer Stabilität, da beim Verschweißen nur die Kunststoffmatrix an der Oberfläche der Fügestelle aufgeschmolzen wird und zum Fügen bereitsteht. Diese Kunststoffmatrix ist jedoch mit Fasern durchsetzt, so dass das für ein dauerhaftes Fügen essentielle Schweißnahtvolumen sehr klein ist, was zu einer geringeren Festigkeit der Schweißnaht und damit einer verminderten mechanischen Stabilität derselben führt. Ferner kann es durch die Temperatureinwirkung beim Schweißen zu lokaler Schädigung gerade der an der Oberfläche der zu fügenden Kunststoffteile liegenden Fasern kommen, was die mechanische Belastbarkeit des geschweißten Bauteils ebenso herabsetzt.

WO 2012/137554 A1 beschreibt ein Verfahren zum Fügen von Verbundgussteilen, wobei zwei faserverstärkte Kunststoffteile mittels eines dünnen Films eines thermoplastischen Harzes gefügt werden.

WO 2012/156525 A1 beschreibt ein Verfahren zur Herstellung eines ausgesteiften Panels durch Drapieren eines ersten faserverstärkten Kunststoffes, Anformen eines thermoplastischen Films, Anordnen einer Versteifungsstruktur aus einem faserverstärkten Kunststoff und Bilden einer Schweißnaht zum Verbinden der drei Komponenten.

WO 2012/101793 A1 offenbart ein faserverstärktes Harzmaterial, das durch Laminieren von zwei faserverstärkten Kunststoffteilen und Einbringen eines thermoplastischen Harzes zwischen die Kunststoffteile gebildet wird.

JPS60239224A beschreibt ein Verfahren zum Verbinden von zwei faserverstärkten Kunststoffteilen über einen Harzfilm durch Ultraschallschweißen.

JP 2008-230224A offenbart die Herstellung eines Verbundbauteils durch Laserschweißen von zwei Faserverbundkunststoffen unter Verwendung eines thermoplastischen Harzes.

JPH09164595A beschreibt ein Verschweißen von zwei Faserverbundkunststoffteilen durch einen thermoplastischen Harz-Abstandshalter.

DE 10 2008 059 142 A1 offenbart ein Verfahren zum kontinuierlichen Fügen von glasseideverstärkten PTFE-Folien mittels Ultraschall.

Menges G. Et al.: "Auf dem Weg zu automatisierbaren Fügeverfahren", Plastikverarbeiter, Bd. 38, Nr. 12, 1. Dezember 1987, Seiten 41-47 beschreibt Fügeverfahren zum Fügen von faserverstärkten Kunststoffen unter Ausnutzung von innerer Wärme, die durch Verwendung von elektrisch leitfähigen Partikeln oder Fasern in den zu fügenden Kunststoffbauteilen erzeugt wird.

Es ist daher Aufgabe der Erfindung ein Verfahren zum Fügen faserverstärkter thermoplastischer Kunststoffteile bereitzustellen, das einfach ohne hohen technischen Aufwand und damit kostengünstig umsetzbar ist und das Herstellen von faserverstärkten thermoplastischen Faserverbundbauteilen mit erhöhter Verbindungsfestigkeit erlaubt, ohne deren übrige Bauteileigenschaften, also insbesondere deren Gewicht und Festigkeit wesentlich zu beeinträchtigen. Ferner ist es Aufgabe der Erfindung ein faserverstärktes thermoplastisches Halbzeug bereitzustellen, das dauerhaft stabil zu einem faserverstärkten Faserverbundbauteil verschweißt werden kann, sowie ein Faserverbundbauteil mit verbesserter Verbindungsfestigkeit und damit erhöhter mechanischer Stabilität vorzusehen.

Die Aufgaben werden gelöst durch die Merkmale der unabhängigen Ansprüche.

Somit wird die Aufgabe gelöst durch ein Verfahren zum Fügen faserverstärkter thermoplastischer Kunststoffteile, das die Schritte:
- Bereitstellen mindestens eines ersten faserverstärkten thermoplastischen Kunststoffteils und mindestens eines zweiten faserverstärkten thermoplastischen Kunststoffteils,
- Aufbringen eines Gebildes aus faserfreiem thermoplastischen Kunststoffmaterial auf mindestens einen Teil eines zum Fügen vorgesehenen Bereichs des ersten faserverstärkten thermoplastischen Kunststoffteils und/oder auf mindestens einen Teil eines zum Fügen vorgesehenen Bereichs des zweiten faserverstärkten thermoplastischen Kunststoffteils und
- Verschweißen der zum Fügen vorgesehenen Bereiche des ersten und zweiten faserverstärkten thermoplastischen Kunststoffteils
umfasst. Das Gebilde aus faserfreiem thermoplastischen Kunststoffmaterial enthält mindestens einen korrosionsstabilen Füllstoff.

Durch das Aufbringen eines Gebildes aus faserfreiem thermoplastischen Kunststoffmaterial auf mindestens einen Teil eines entsprechend zum Fügen vorgesehenen Bereichs, wird das für das Schweißen zur Verfügung stehende thermoplastische Kunststoffmatrixvolumen im Bereich der zu bildenden Schweißnaht erhöht. Dies führt zu einer deutlich erhöhten Verbindungsfestigkeit der Kunststoffteile und damit zu einem mechanisch stabilen Faserverbundbauteil mit ausgeprägter, homogener und mechanisch belastbarer Schweißnaht. Die in den zu fügenden faserverstärkten Kunststoffteilen vorliegenden Fasern werden zudem durch das Bedecken mit dem Gebilde aus faserfreiem thermoplastischen Kunststoffmaterial vor lokalen Schädigungen geschützt, was der mechanischen Belastbarkeit des entstehenden Faserverbundbauteils weiter zuträglich ist. Dadurch, dass das faserfreie thermoplastische Kunststoffmaterial auf mindestens einen der zu fügenden Bereiche der Kunststoffteile und hier vorteilhafterweise mindestens an diejenigen Stellen bzw. diejenigen Teile, die später einmal den höchsten mechanischen Belastungen ausgesetzt sind, appliziert wird, werden die Bauteileigenschaften des entstehenden Faserverbundbauteils, und hierunter insbesondere dessen Gewicht und Festigkeit, im Wesentlichen nicht beeinträchtigt.

Faserverstärkte thermoplastische Kunststoffteile im Sinne der Erfindung können beliebige thermoplastische Kunststoffe enthalten, vorzugsweise Polyamide (z.B. PA6 oder PA66), Polyetherimide, Polypropylene oder Polyphenylensulfide sowie deren jeweilige Derivate, und können jeweils aus einer Schicht eines faserverstärkten thermoplastischen Kunststoffes, aus mehreren gleichen aber auch aus sowohl chemisch als auch in ihren Abmessungen unterschiedlich aufgebauten Schichten bestehen und auch faserfreie Schichten enthalten, wobei das jeweilige Fasermaterial ebenfalls nicht beschränkt ist und je nach Anwendung ausgewählt werden kann. In jedem Fall bildet eine faserverstärkte Schicht die oberste Lage der Kunststoffteile, auf deren Fügebereich(e) das erfindungsgemäße Gebilde aus faserfreiem thermoplastischen Kunststoffmaterial aufgebracht wird. Die faserverstärkten thermoplastischen Kunststoffteile können dabei jeweils einen oder mehrere zum Fügen vorgesehene Bereiche umfassen. Auf diese Weise können die Eigenschaften des herzustellenden Faserverbundbauteils sehr gut auf die jeweils vorgesehene Anwendung abgestimmt werden.

Das erfindungsgemäße Gebilde aus faserfreiem thermoplastischen Kunststoffmaterial kann in beliebiger Form auf einen oder mehrere Fügebereiche eines oder mehrerer zu fügenden Kunststoffteile aufgebracht sein und bedeckt mindestens einen Teil des zum Fügen vorgesehenen Bereichs des ersten Kunststoffteils und/oder mindestens einen Teil des zum Fügen vorgesehenen Bereichs des zweiten Kunststoffteils, wobei das Schweißnahtvolumen in dem entsprechenden Teil des zum Fügen vorgesehenen Bereichs vergrößert und die Festigkeit der Schweißnaht sowie ihre mechanische Belastbarkeit damit erhöht werden. Das Aufbringen des faserfreien thermoplastischen Materials ist insbesondere an denjenigen Stellen der Fügebereiche besonders vorteilhaft, die später einmal hohen, zumeist mechanischen Belastungen ausgesetzt sind, da durch das erfindungsgemäße Verfahren gerade an diesen Stellen eine besonders homogen und stabil ausgebildete Schweißnaht gebildet wird, die eine sehr hohe Verbindungsfestigkeit der gefügten Kunststoffteile bedingt, so dass das erhaltene Faserverbundbauteil somit gegenüber mechanischen Einwirkungen stabilisiert ist.

Besonders vorteilhaft wird das erfindungsgemäße Verfahren zum Fügen von Kunststoffteilen ausgeführt, indem auf alle zum Fügen vorgesehenen Bereiche aller zu fügenden faserverstärkten thermoplastischen Kunststoffteile, ein Gebilde aus faserfreiem thermoplastischen Kunststoffmaterial aufgebracht wird, da sich somit die vorstehend beschriebenen vorteilhaften Eigenschaften in dem gesamten, durch das erfindungsgemäße Verfahren hergestellten Faserverbundbauteil widerspiegeln und ein Faserverbundbauteil von besonders hoher Güte und sehr guter Festigkeit erhalten werden kann.

Das thermoplastische Material des Gebildes aus faserfreiem thermoplastischen Material ist im Einzelnen nicht beschränkt und kann beliebige thermoplastische Kunststoffe enthalten, vorzugsweise Polyamide (z.B. PA6 oder PA66), Polyetherimide, Polypropylene oder Polyphenylensulfide sowie deren jeweilige Derivate. Als besonders vorteilhaft haben sich thermoplastische Materialien erwiesen, die sich, wie die vorstehend genannten thermoplastischen Kunststoffe, leicht und vollständig schweißen lassen und eine hohe Kompatibilität mit der Kunststoffmatrix der zu fügenden faserverstärkten thermoplastischen Kunststoffteile aufweisen. Das thermoplastische Material ist faserfrei, kann aber übliche Zusätze wie Stabilisatoren, Weichmacher, Farbstoffe, Pigmente und dergleichen enthalten. Vorzugsweise liegt das faserfreie thermoplastische Kunststoffmaterial als flächenförmiges Gebilde, also insbesondere schichtförmig oder filmförmig vor. Somit können größere Bereiche der Fügestelle(n) bedeckt werden, wodurch die Fasern der faserverstärkten Kunststoffteile besonders umfassend geschützt werden und eine sehr gute Verbindungsfestigkeit aufgrund des höheren Schweißnahtvolumens erzielt wird.

Da das Aufbringen des Gebildes aus faserfreiem thermoplastischen Kunststoffmaterial sowie das Ausführen unterschiedlicher Schweißverfahren einfach ohne hohen technischen Aufwand umsetzbar sind, ist das erfindungsgemäße Verfahren unkompliziert und damit auch kostengünstig.

Die Unteransprüche haben vorteilhafte Weiterbildungen der Erfindung zum Gegenstand.

Gemäß einer vorteilhaften Weiterbildung bedeckt das Gebilde aus faserfreiem thermoplastischen Kunststoffmaterial den zum Fügen vorgesehenen Bereich des ersten faserverstärkten thermoplastischen Kunststoffteils und/oder den zum Fügen vorgesehenen Bereich des zweiten faserverstärkten thermoplastischen Kunststoffteils vollständig. Hierdurch wird Fehlstellen in der auszubildenden Schweißnaht vorgebeugt, die Fasern im Fügebereich vollständig geschützt und ein besonders stabiler, homogener und aufgrund des erhöhten Schweißnahtvolumens mechanisch stark belastbarer gefügter Bereich erzielt.

Eine weitere vorteilhafte Weiterbildung sieht vor, dass das Verschweißen der Kunststoffteile mittels Ultraschallschweißen, Heizelementschweißen, Infrarotschweißen, Vibrationsschweißen oder Laserstrahlschweißen ausgeführt wird. Diese Schweißverfahren sind ohne hohen technischen Aufwand einfach anwendbar und erlauben die präzise Bildung auch von flächenmäßig kleineren Schweißnähten hoher Güte.

Weiter vorteilhaft ist das erfindungsgemäße Verfahren dadurch gekennzeichnet, dass das Gebilde aus faserfreiem thermoplastischen Kunststoffmaterial mittels Tapelegeverfahren, Filmstacking oder Vernähen auf den zum Fügen vorgesehenen Bereich des ersten und/oder den zum Fügen vorgesehenen Bereich des zweiten faserverstärkten thermoplastischen Kunststoffteils aufgebracht wird. Besonders vorteilhaft liegt das Kunststoffmaterial hierzu schichtförmig vor. Gerade das Tapelegeverfahren und das Filmstacking zeichnen sich durch eine hohe Präzision und große Flexibilität bei der Herstellung von Kunststoffhalbzeugen aus. So ist hier beispielsweise der Faseranteil in dem Kunststoffhalbzeug genau einstellbar und darüber hinaus kann das faserfreie thermoplastische Kunststoffmaterial homogen ohne lokale Defekte oder Fehlstellen appliziert werden. Beim Vernähen wird beispielsweise ein faserfreies thermoplastisches Flächengebilde auf die vorgesehene, zum Fügen bereitgestellte Fläche eines faserverstärkten Kunststoffteils aufgelegt und mit dieser Fläche in geeigneter Weise vernäht. Dieses Verfahren ist gerade für große Fügeflächen einfach und kostengünstig umsetzbar.

Gemäß einer weiteren vorteilhaften Weiterbildung enthält das Gebilde aus faserfreiem thermoplastischen Kunststoffmaterial mindestens einen elektrisch leitenden Füllstoff. Dieser trägt zu einer schnellen, effektiven und lokal homogenen Erwärmung der Schweißstelle bei. Elektrisch leitende Füllstoffe können beispielsweise Metallpartikel, keramische Partikel oder Kohlenstoffpartikel sein. Vorzugsweise kommen Rußpartikel oder Metallpartikel und insbesondere Aluminiumpartikel zu Anwendung. Die elektrisch leitenden Füllstoffe können einzeln oder als Mischung eingesetzt werden. Besonders vorteilhaft wird ein elektrisch leitender Füllstoff eingesetzt, der mittels Induktion aktivierbar ist, da dies eine besonders effektive und gleichmäßige Erwärmung der Schweißstelle bewirkt. Hierzu zählen insbesondere Magnetit und Glaskugeln mit Silberbeschichtung.

Das Gebilde aus faserfreiem thermoplastischen Kunststoffmaterial enthält mindestens einen korrosionsstabilen Füllstoff. Dieser erzeugt eine galvanische Trennung zu den meist korrosionsanfälligen Fasern des faserverstärkten thermoplastischen Kunststoffteils, insbesondere bei der Verwendung von Kohlefasern als Verstärkungsmaterial. Hierdurch wird die dauerhafte mechanische Belastbarkeit und Festigkeit der gefügten Kunststoffteile gefördert. Als korrosionsstabile Füllstoffe kommen vorzugsweise solche zur Anwendung, die ausgewählt sind aus: Kieselgur, Kreide und Glaskugeln. Diese Füllstoffe können sowohl einzeln als auch in Mischungen eingesetzt werden.

Ebenfalls erfindungsgemäß wird auch ein faserverstärktes thermoplastisches Halbzeug beschrieben, das ein faserverstärktes thermoplastisches Kunststoffteil und ein Gebilde aus faserfreiem thermoplastischen Kunststoffmaterial umfasst. Das faserverstärkte thermoplastische Kunststoffteil umfasst dabei mindestens eine faserverstärkte Schicht eines thermoplastischen Kunststoffes. Enthält das Kunststoffteil mehrere Schichten, so können diese identisch sein, können aber auch in ihrer Zusammensetzung und/oder ihren Abmessungen unterschiedlich sein. In jedem Fall bildet eine faserverstärkte Schicht die oberste Lage, auf die das Gebilde aus faserfreiem thermoplastischen Kunststoffmaterial aufgebracht ist. Das Gebilde aus faserfreiem thermoplastischen Kunststoffmaterial, das vorzugsweise als Schicht ausgebildet ist, bildet somit die oberste Schicht und ist damit zum Fügen eines weiteren faserverstärkten thermoplastischen Kunststoffhalbzeugs vorgesehen. Das Gebilde aus faserfreiem thermoplastischen Kunststoffmaterial enthält dabei mindestens einen korrosionsstabilen Füllstoff. Ein solches Halbzeug kann dauerhaft mit einem weiteren faserverstärkten thermoplastischen Kunststoffhalbzeug mittels eines geeigneten Schweißverfahrens gefügt werden. Aufgrund des an der Fügestelle vorliegenden Gebildes aus faserfreiem thermoplastischen Kunststoffmaterial und dem damit verbundenen erhöhten Schweißnahtvolumen, wird eine mechanisch belastbare Schweißnaht gebildet, die auch großen mechanischen Einwirkungen standhält. Besonders vorteilhaft werden zum Fügen zwei oder mehrere der erfindungsgemäßen Halbzeuge verwendet, da sich hier die vorteilhaften Eigenschaften in dem gesamten hieraus hergestellten Faserverbundbauteil widerspiegeln. Die jeweils vorzugsweise verwendeten Materialien für das erfindungsgemäße faserverstärkte thermoplastische Halbzeug sind die gleichen wie sie für das vorstehend beschriebene erfindungsgemäße Verfahren verwendet werden.

Vorteilhafterweise weist das Gebilde aus faserfreiem thermoplastischen Kunststoffmaterial eine durchschnittliche Schichtdicke D von 50 bis 500 µm, vorzugsweise von 100 bis 300 µm, auf. Die durchschnittliche Schichtdicke D kann dabei mittels einer Mikrometerschraube bestimmt werden und bezeichnet die Dicke der Schicht in Stapelrichtung der Schichten. Eine durchschnittliche Schichtdicke D von mindestens 50 µm und vorzugsweise von mindestens 100 µm ist dabei ausreichend, um das Schweißnahtvolumen auf dem vorgesehenen Fügebereich zu vergrößern und eine höhere Verbindungsfestigkeit zwischen den verschweißten Kunststoffteilen zu erzielen. Das faserfreie thermoplastische Kunststoffmaterial kann damit den Fügebereich sogar vollständig bedecken und auch geometrische Toleranzen, wie beispielsweise Unebenheiten in den zu fügenden Schichten, ausgleichen. Bei einer durchschnittlichen Schichtdicke D von mehr als 300 µm und insbesondere von mehr als 500 um werden die mechanischen Eigenschaften des herzustellenden Faserverbundbauteils insbesondere um die Schweißnähte herum reduziert, da dann ein sehr großer faserfreier Teilbereich entsteht, der eine geringere Festigkeit als die restlichen faserverstärkten Bereiche aufweist. Die Festigkeit des gesamten Faserverbundbauteils ist damit lokal beeinträchtigt.

Die für das erfindungsgemäße Verfahren zum Fügen faserverstärkter thermoplastischer Kunststoffteile beschriebenen vorteilhaften Weiterbildungen, Vorteile und Effekte finden auch Anwendung auf das erfindungsgemäße faserverstärkte thermoplastische Halbzeug.

Weiter erfindungsgemäß wird auch ein Faserverbundbauteil beschrieben, das mindestens ein erstes faserverstärktes thermoplastisches Kunststoffteil und mindestens ein zweites faserverstärktes thermoplastisches Kunststoffteil umfasst, die über ein Gebilde aus faserfreiem thermoplastischen Kunststoffmaterial, das mindestens einen korrosionsstabilen Füllstoff enthält, miteinander verbunden, also verschweißt, sind. Die faserverstärkten thermoplastischen Kunststoffteile sind dabei wie oben dargelegt ausgebildet und können aus einer oder mehreren Schicht aufgebaut sein, wobei die oberste Schicht, auf die das Gebilde aus faserfreiem thermoplastischen Material aufgebracht ist, eine faserverstärkte Schicht ist. Das Gebilde aus faserfreiem thermoplastischen Kunststoffmaterial kann dabei jegliche beliebige Form aufweisen und ist vorzugsweise schichtförmig ausgebildet, so dass es in jedem Fall diejenigen Stellen der Fügebereiche, die später einmal hohen mechanischen Belastungen ausgesetzt sind, abdeckt. Somit bedeckt das Gebilde aus faserfreiem thermoplastischen Kunststoffmaterial die Fügestellen mindestens teilweise, wobei weiter vorzugsweise eine durchschnittliche Schichtdicke D des Gebildes aus faserfreiem thermoplastischen Kunststoffmaterial 5 bis 100 µm, vorzugsweise 5 bis 50 µm, beträgt. Eine derartige Schichtdicke ergibt sich, wenn mindestens ein Faserhalbzeug verwendet wird, das im Fügebereich ein Gebilde aus faserfreiem thermoplastischen Kunststoffmaterial mit einer Schichtdicke von 50 bis 500 µm und vorzugsweise von 100 bis 300 µm verwendet wird. Beim Verschweißen der thermoplastischen Kunststoffteile via dem faserfreien thermoplastischen Kunststoffmaterial, verläuft das faserfreie thermoplastische Kunststoffmaterial gleichmäßig auf den zu fügenden Flächen und gleicht deren Unebenheiten aus. So ist die Schichtdicke des Gebildes aus faserfreiem thermoplastischen Kunststoffmaterial nach dem Schweißvorgang, auch aufgrund des angewendeten Druckes, auf vorzugsweise 5 bis 50 µm verringert, was ausreichend ist, um eine dauerhafte Stabilität des Faserverbundbauteils zu gewährleisten. Die jeweils vorzugsweise verwendeten Materialien für das erfindungsgemäße Faserverbundbauteil sind die gleichen wie diejenigen, die in dem vorstehend beschriebenen erfindungsgemäßen Verfahren Anwendung finden.

Ein derart strukturiertes Faserverbundbauteil zeichnet sich durch eine homogene Festigkeit und damit eine außerordentlich hohe mechanische Belastbarkeit aus, was auf die, aus dem vergrößerten Schweißnahtvolumen resultierende, erhöhte Verbindungsfestigkeit der Fügestellen der Kunststoffteile zurückzuführen ist. Das Gewicht des Faserverbundbauteils bleibt hierbei im Wesentlichen unverändert, da das faserfreie thermoplastische Kunststoffmaterial vorzugsweise in wesentlichen Bereichen der Fügestellen vorhanden ist, nämlich in solchen Bereichen, die bei Anwendung des Faserverbundbauteils hohen mechanischen Anforderungen unterliegen. Das faserfreie thermoplastische Kunststoffmaterial kann aber, je nach Komplexität und Größe der Fügestellen, diese auch komplett bedecken, was die Fasern im gesamten Fügebereich schützt und eine besonders homogene Ausbildung der gesamten Schweißnaht fördert.

Die für das erfindungsgemäße Verfahren zum Fügen faserverstärkter thermoplastischer Kunststoffteile sowie für das erfindungsgemäße faserverstärkte thermoplastische Halbzeug beschriebenen vorteilhaften Weiterbildungen, Vorteile und Effekte finden auch Anwendung auf das erfindungsgemäße Faserverbundbauteil.

Gemäß einer vorteilhaften Weiterbildung ist das erfindungsgemäße Faserverbundbauteil dadurch gekennzeichnet, dass das Gebilde aus faserfreiem thermoplastischen Kunststoffmaterial mindestens einen elektrisch leitenden Füllstoff enthält. Während elektrisch leitende Füllstoffe, wie beispielsweise Metallpartikel, keramische Partikel oder Kohlenstoffpartikel und insbesondere Rußpartikel oder Metallpartikel und hierunter insbesondere Aluminiumpartikel, zu einer schnellen, effektiven und lokal homogenen Erwärmung, vorzugsweise auch via Induktion, insbesondere bei Verwendung von Magnetit oder Glaskugeln mit Silberbeschichtung, der Schweißstelle beitragen und somit eine besonders effektive und gleichmäßige Erwärmung der Schweißstelle bewirken, erzeugen korrosionsstabile Füllstoffe eine galvanische Trennung zu den meist korrosionsanfälligen Fasern des faserverstärkten thermoplastischen Kunststoffteils, insbesondere bei der Verwendung von Kohlefasern als Verstärkungsmaterial, wodurch die mechanische Belastbarkeit und Festigkeit der gefügten Kunststoffteile gefördert wird. Eine Kombination von beiden Füllstoffsorten trägt bedeutend zur hohen qualitativen Güte des erfindungsgemäßen Faserverbundbauteils bei. Als korrosionsstabile Füllstoffe kommen aus den vorstehend genannten Gründen vorzugsweise solche zur Anwendung, die ausgewählt sind aus: Kieselgur, Kreide und Glaskugeln. Die elektrisch leitenden Füllstoffe und/oder korrosionsstabilen Füllstoffe können sowohl jeweils einzeln als auch in beliebigen Mischungen eingesetzt werden.

Weiter erfindungsgemäß wird auch die Verwendung eines Gebildes aus faserfreiem thermoplastischen Kunststoffmaterial zum Fügen von zwei oder mehreren faserverstärkten thermoplastischen Kunststoffteilen mittels Schweißen beschrieben. Das Gebilde aus faserfreiem thermoplastischen Kunststoffmaterial enthält mindestens einen korrosionsstabilen Füllstoff. Hierdurch können besonders stabile, mechanisch belastbare Faserverbundbauteile mit hoher, homogener Festigkeit und exzellenter Verbindungsfestigkeit der Kunststoffteile gebildet werden, deren Gewicht im Wesentlichen nicht beeinträchtigt ist.

Die vorliegende Erfindung eignet sich insbesondere zur Herstellung von Struktur-Karosserieteilen und Interieur-Bauteilen. Für Strukturbauteile in der Karosserie werden insbesondere faserverstärkte Kunststoffe verwendet, die als Fasermaterial Endloskohlefasern mit einem Faservolumenanteil von 50% in einer Kunststoffmatrix aus PA66 enthalten. Für Interieur-Bauteile werden beispielsweise faserverstärkte Kunststoffe mit Glasfasern in Polyamiden, Polyphenylensulfiden oder Polyetherimiden verwendet, wobei die Polymere eingefärbt sein können, um einen optischen Effekt zu erzielen. Für Strukturbauteile, die weniger starker mechanischer Belastung ausgesetzt sind, sind Basaltfasern in Verbindung mit Polyamiden, Polyphenylensulfiden oder Polyetherimiden geeignet. Selbstverständlich können die jeweils verwendeten thermoplastischen Kunststoffe auch als Kunststoffblend oder in Form ihrer jeweiligen Derivate (z.B. Copolymere, Crosspolymere), eingesetzt werden. Dies gilt auch für die jeweils verwendeten Fasern, die damit auch hybride Fasern umfassen, wie beispielsweise Kombinationen aus Glas- und Kohlefasern oder Kohle- und Basaltfasern und dergleichen.

Weitere Einzelheiten, Merkmale und Vorteile der Erfindung ergeben sich aus der nachfolgenden Beschreibung und den Figuren. Es zeigen:
- Figur 1: ein faserverstärktes thermoplastisches Halbzeug gemäß einer ersten vorteilhaften Weiterbildung der Erfindung,
- Figur 2: ein faserverstärktes thermoplastisches Halbzeug gemäß einer zweiten vorteilhaften Weiterbildung der Erfindung und
- Figur 3: ein Faserverbundbauteil gemäß einer dritten vorteilhaften Weiterbildung der Erfindung.

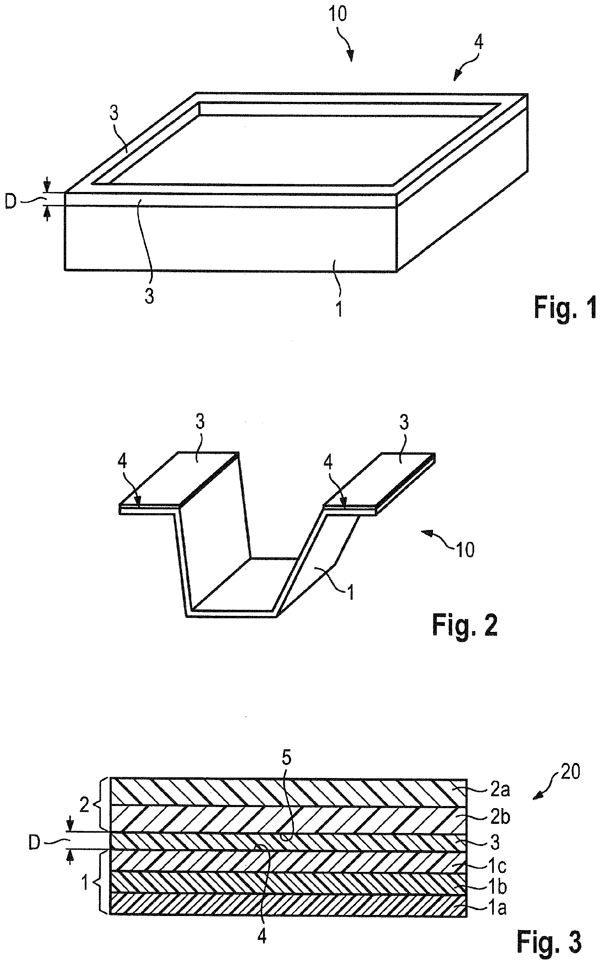

Figur 1 zeigt ein faserverstärktes thermoplastisches Halbzeug 10 gemäß einer ersten vorteilhaften Weiterbildung der Erfindung. Das Halbzeug 10 umfasst ein faserverstärktes thermoplastisches Kunststoffteil 1, das einschichtig ausgebildet ist, und ein Gebilde aus faserfreiem thermoplastischen Kunststoffmaterial 3, das den Rand des Kunststoffteils 1 vollständig umgibt. Das Gebilde aus faserfreiem thermoplastischen Kunststoffmaterial 3 weist beispielsweise eine durchschnittliche Schichtdicke D von 200 µm auf. Das Gebilde aus faserfreiem thermoplastischen Kunststoffmaterial 3 ist auf das thermoplastische Kunststoffteil 1 aufgebracht und stellt die oberste Schicht dar, die zum Fügen eines weiteren faserverstärkten thermoplastischen Kunststoffhalbzeugs vorgesehen ist. Durch den hier gezeigten strukturellen Aufbau des faserverstärkten thermoplastischen Halbzeugs 10 wird beim Verschweißen desselben mit einem weiteren faserverstärkten thermoplastischen Kunststoffhalbzeug an den mit dem Gebilde aus faserfreiem thermoplastischen Kunststoffmaterial 3 bedeckten Stellen das Schweißnahtvolumen erhöht, was die in dem faserverstärkten thermoplastischen Kunststoffteil 1 des Halbzeugs 10 vorliegenden Fasern schützt und zu einer erhöhten Verbindungsfestigkeit der gefügten Kunststoffhalbzeuge führt. Ein auf diese Weise gebildetes Faserverbundbauteil zeichnet sich durch eine hohe homogene Festigkeit und sehr gute mechanische Belastbarkeit bei im Wesentlichen gleichbleibendem Gewicht aus.

Figur 2 zeigt ein faserverstärktes thermoplastisches Halbzeug 10 gemäß einer zweiten vorteilhaften Weiterbildung der Erfindung. Das Halbzeug 10 umfasst wiederum ein faserverstärktes thermoplastisches Kunststoffteil 1, das einschichtig ausgebildet ist, und ein Gebilde aus faserfreiem thermoplastischen Kunststoffmaterial 3, das auf das Kunststoffteil 1 aufgebracht ist und die oberste Schicht darstellt. Das Gebilde aus faserfreiem thermoplastischen Kunststoffmaterial 3 ist schichtförmig auf die zum Fügen vorgesehenen Bereiche 4 aufgetragen und bedeckt diese vollständig. Alle weiteren Flächen des faserverstärkten thermoplastischen Kunststoffteils 1 sind nicht zum Fügen vorgesehen. Durch das Aufbringen des Gebildes aus faserfreiem thermoplastischen Kunststoffmaterial 3 lediglich auf die zum Fügen vorgesehenen Bereiche, wird einer starken Gewichtszunahme eines hieraus hergestellten Faserverbundbauteils, entgegengewirkt. Das vollständige Bedecken der beiden zum Fügen vorgesehenen Bereiche 4 mit faserfreiem thermoplastischen Kunststoffmaterial 3 erhöht das Schweißnahtvolumen gleichförmig in allen Teilen der Fügebereiche 4, wodurch besonders homogene und gut, sowie stabil ausgeprägte Schweißnähte beim Verschweißen dieses Halbzeugs 10 mit einem weiteren faserverstärkten Halbzeug gebildet werden und somit ein Faserverbundbauteil mit sehr guter Festigkeit und hoher mechanischer Belastbarkeit hergestellt werden kann.

Figur 3 zeigt ein Faserverbundbauteil 20 gemäß einer dritten vorteilhaften Weiterbildung der Erfindung. Das Faserverbundbauteil 20 zeichnet sich durch einen schichtartigen Aufbau aus. Hierbei sind die Schichten 1a, 1b und 1c einem ersten faserverstärkten thermoplastischen Kunststoffteil 1 und die Schichten 2a, 2b einem zweiten faserverstärkten thermoplastischen Kunststoffteil 2 zuordenbar. Die jeweiligen Schichten können eine identische Zusammensetzung, also einen identischen thermoplastischen Kunststoff und identische Verstärkungsfasern sowie andere übliche Zusätze enthalten, können aber sowohl in der chemischen Zusammensetzung, wie auch den Mengenanteilen der jeweiligen Inhaltsstoffe oder den Abmessungen der Schichten variieren. In jedem Fall sind die Schichten 1c und 2b, die mit dem Gebilde aus faserfreiem thermoplastischen Kunststoffmaterial 3 in Verbindung stehen, also mit diesem verschweißt sind, faserverstärkte Schichten. Hierdurch lassen sich die mechanischen, physikalischen und chemischen Eigenschaften des Faserverbundbauteils 20 bestens auf die vorgesehene Anwendung abstimmen und eine gute Verbindungsfestigkeit zwischen den Schichten 1a, 1b, 1c und 2a, 2b, auf der einen Seite und den Kunststoffteilen 1, 2, auf der anderen Seite erzielen. Die jeweiligen Kunststoffteile 1, 2 werden vorzugsweise mittels Tapelegeverfahren oder mittels Filmstacking hergestellt, da diese Verfahren einfach umzusetzen sind. Auch das Gebilde aus faserfreiem thermoplastischen Kunststoffmaterial 3 kann vorteilhafterweise mittels dieser Techniken aufgebracht werden. Dies birgt den weiteren Vorteil, dass das Gebilde aus faserfreiem thermoplastischen Kunststoffmaterial 3 nicht in einem separaten Schritt auf das bzw. die Kunststoffteile 1, 2 appliziert werden muss, sondern bereits bei deren Herstellung mit aufgetragen werden kann, was einen Arbeitsschritt und damit Zeit und Kosten bei der Herstellung des Faserverbundbauteils 20 spart. Das Gebilde 3 ist hier beispielswiese als Schicht ausgebildet. Gerade das Aufbringen des Gebildes aus faserfreiem thermoplastischen Kunststoffmaterial 3 in Form einer Schicht auf die Fügestellen 4, 5, beider Kunststoffteile 1, 2, in der Art, dass die Fügestellen 4, 5, vollständig bedeckt werden, sichert die Ausbildung einer dauerhaften und besonders homogenen Schweißnaht mit hoher Stabilität, was zu einer außerordentlich guten Verbindungsfestigkeit und damit auch sehr guten mechanischen Belastbarkeit des Faserverbundbauteils 20 beiträgt. Durch das Verschweißen des ersten faserverstärkten thermoplastischen Kunststoffteils 1 und des zweiten faserverstärkten thermoplastischen Kunststoffteils 2 und das damit verbundene Einbringen von Wärme in das Gebilde aus faserfreiem thermoplastischen Kunststoffmaterial 3, verläuft dieses auf der jeweiligen Fügeoberfläche 4, 5 des ersten und zweiten faserverstärkten thermoplastischen Kunststoffteils 1, 2 und gleicht deren Unebenheiten aus, was die Homogenität des Faserverbundbauteils 20 erhöht. Dadurch verringert sich aber die Schichtdicke des Gebildes aus faserfreiem thermoplastischen Kunststoffmaterial 3, so dass die durchschnittliche Schichtdicke D des Gebildes aus faserfreiem thermoplastischen Kunststoffmaterial 3 in dem ausgebildeten Faserverbundbauteil 20 beispielsweise etwa 45 µm beträgt. Diese Schichtdicke ist ausreichend um eine Schweißnaht von hoher Stabilität zu ergeben.

### Bezugszeichenliste

- 1: erstes faserverstärktes thermoplastisches Kunststoffteil
- 1a: erste Schicht des ersten faserverstärkten thermoplastischen Kunststoffteils
- 1b: zweite Schicht des ersten faserverstärkten thermoplastischen Kunststoffteils
- 1c: dritte Schicht des ersten faserverstärkten thermoplastischen Kunststoffteils
- 2: zweites faserverstärktes thermoplastisches Kunststoffteil
- 2a: erste Schicht des zweiten faserverstärkten thermoplastischen Kunststoffteils
- 2b: zweite Schicht des zweiten faserverstärkten thermoplastischen Kunststoffteils
- 3: Gebilde aus faserfreiem thermoplastischen Kunststoffmaterial
- 4: zum Fügen vorgesehener Bereich des ersten faserverstärkten thermoplastischen Kunststoffteils
- 5: zum Fügen vorgesehener Bereich des zweiten faserverstärkten thermoplastischen Kunststoffteils
- 10: faserverstärktes thermoplastisches Halbzeug
- 20: Faserverbundbauteil

## Patentansprüche

1. Verfahren zum Fügen faserverstärkter thermoplastischer Kunststoffteile, umfassend die Schritte:
- Bereitstellen mindestens eines ersten faserverstärkten thermoplastischen Kunststoffteils (1) und mindestens eines zweiten faserverstärkten thermoplastischen Kunststoffteils (2),
- Aufbringen eines Gebildes aus faserfreiem thermoplastischen Kunststoffmaterial (3) auf mindestens einen Teil eines zum Fügen vorgesehenen Bereichs des ersten faserverstärkten thermoplastischen Kunststoffteils (4) und/oder auf mindestens einen Teil eines zum Fügen vorgesehenen Bereichs des zweiten faserverstärkten thermoplastischen Kunststoffteils (5) und
- Verschweißen der zum Fügen vorgesehenen Bereiche des ersten und zweiten faserverstärkten thermoplastischen Kunststoffteils (4, 5), **dadurch gekennzeichnet,**
**dass** das Gebilde aus faserfreiem thermoplastischen Kunststoffmaterial (3) mindestens einen korrosionsstabilen Füllstoff enthält.

2. Verfahren nach Anspruch 1, **dadurch gekennzeichnet, dass** das Gebilde aus faserfreiem thermoplastischen Kunststoffmaterial (3) den zum Fügen vorgesehenen Bereich des ersten faserverstärkten thermoplastischen Kunststoffteils (4) und/oder den zum Fügen vorgesehenen Bereich des zweiten faserverstärkten thermoplastischen Kunststoffteils (5) vollständig bedeckt.

3. Verfahren nach Anspruch 1 oder 2, **dadurch gekennzeichnet, dass** das Verschweißen als Ultraschallschweißen, Heizelementschweißen, Infrarotschweißen, Vibrationsschweißen oder Laserstrahlschweißen ausgeführt wird.

4. Verfahren nach einem der vorhergehenden Ansprüche, **dadurch gekennzeichnet, dass** das Gebilde aus faserfreiem thermoplastischen Kunststoffmaterial (3) mittels Tapelegeverfahren, Filmstacking oder Vernähen auf den zum Fügen vorgesehenen Bereich des ersten faserverstärkten thermoplastischen Kunststoffteils (4) und/oder auf den zum Fügen vorgesehenen Bereich des zweiten faserverstärkten thermoplastischen Kunststoffteils (5) aufgebracht wird.

5. Verfahren nach einem der vorhergehenden Ansprüche, **dadurch gekennzeichnet, dass** das Gebilde aus faserfreiem thermoplastischen Kunststoffmaterial (3) mindestens einen elektrisch leitenden Füllstoff, vorzugsweise ausgewählt aus Rußpartikeln oder Metallpartikeln, insbesondere Aluminiumpartikel, enthält.

6. Verfahren nach einem der vorhergehenden Ansprüche, **dadurch gekennzeichnet, dass** der korrosionsstabile Füllstoff ausgewählt ist aus Kieselgur, Kreide und Glaskugeln.

7. Faserverstärktes thermoplastisches Halbzeug umfassend
- ein faserverstärktes thermoplastisches Kunststoffteil (1, 2)
umfassend mindestens eine faserverstärkte Schicht eines thermoplastischen Kunststoffes und
- mindestens ein Gebilde aus faserfreiem thermoplastischen Kunststoffmaterial (3),
wobei das Gebilde aus faserfreiem thermoplastischen Kunststoffmaterial (3) auf die faserverstärkte Schicht des faserverstärkten thermoplastischen Kunststoffteils (1, 2) aufgebracht ist und zum Fügen eines weiteren faserverstärkten thermoplastischen Kunststoffhalbzeugs vorgesehen ist, und
- wobei das Gebilde aus faserfreiem thermoplastischen Kunststoffmaterial (3) vorzugsweise eine durchschnittliche Schichtdicke D von 50 bis 500 µm, insbesondere von 100 bis 300 µm, aufweist, **dadurch gekennzeichnet,**
**dass** das Gebilde aus faserfreiem thermoplastischen Kunststoffmaterial (3) mindestens einen korrosionsstabilen Füllstoff enthält.

8. Faserverbundbauteil umfassend
- mindestens ein erstes faserverstärktes thermoplastisches Kunststoffteil (1) und
- mindestens ein zweites faserverstärktes thermoplastisches Kunststoffteil (2),
die über ein Gebilde aus faserfreiem thermoplastischen Kunststoffmaterial (3) miteinander verbunden sind,
- wobei das Gebilde aus faserfreiem thermoplastischen Kunststoffmaterial (3) vorzugsweise eine durchschnittliche Schichtdicke D von 5 bis 100 µm, insbesondere von 5 bis 50 µm, aufweist, **dadurch gekennzeichnet,**
**dass** das Gebilde aus faserfreiem thermoplastischen Kunststoffmaterial (3) mindestens einen korrosionsstabilen Füllstoff enthält.

9. Faserverbundbauteil nach Anspruch 8, **dadurch gekennzeichnet, dass** das Gebilde aus faserfreiem thermoplastischen Kunststoffmaterial (3) mindestens einen elektrisch leitenden Füllstoff, vorzugsweise ausgewählt aus Rußpartikeln oder Metallpartikeln, insbesondere Aluminiumpartikel, enthält und/oder dass der korrosionsstabile Füllstoff ausgewählt ist aus Kieselgur, Kreide und Glaskugeln.

10. Verwendung eines Gebildes aus faserfreiem thermoplastischen Kunststoffmaterial (3) zum Fügen von zwei oder mehreren faserverstärkten thermoplastischen Kunststoffteilen (1, 2) mittels Schweißen, **dadurch gekennzeichnet, dass** das Gebilde aus faserfreiem thermoplastischen Kunststoffmaterial (3) mindestens einen korrosionsstabilen Füllstoff enthält.

## Claims

1. A method for joining fibre-reinforced thermoplastic plastics-material parts, comprising the steps:
- providing at least a first fibre-reinforced thermoplastic plastics-material part (1) and at least a second fibre-reinforced thermoplastic plastics-material part (2),
- applying a structure made of fibre-free thermoplastic plastics material (3) to at least one part of a region, provided for joining, of the first fibre-reinforced thermoplastic plastics-material part (4) and/or to at least one part of a region, provided for joining, of the second fibre-reinforced thermoplastic plastics-material part (5), and
- welding the regions, provided for joining, of the first and second fibre-reinforced thermoplastic plastics-material parts (4, 5), **characterised in that**
the structure made of fibre-free thermoplastic plastics material (3) contains at least one corrosion-resistant filler.

2. A method according to Claim 1, **characterised in that** the structure made of fibre-free thermoplastic plastics material (3) completely covers the region, provided for joining, of the first fibre-reinforced thermoplastic plastics-material part (4) and/or the region, provided for joining, of the second fibre-reinforced thermoplastic plastics-material part (5).

3. A method according to Claim 1 or Claim 2, **characterised in that** the welding is carried out as ultrasonic welding, heated-tool welding, infrared welding, vibration welding or laser welding.

4. A method according to one of the preceding claims, **characterised in that** the structure made of fibre-free thermoplastic plastics material (3) is applied by means of tape laying processes, film stacking or stitching to the region, provided for joining, of the first fibre-reinforced thermoplastic plastics-material part (4) and/or to the region, provided for joining, of the second fibre-reinforced thermoplastic plastics-material part (5).

5. A method according to one of the preceding claims, **characterised in that** the structure made of fibre-free thermoplastic plastics material (3) contains at least one electrically conductive filler, preferably selected from soot particles or metal particles, especially aluminium particles.

6. A method according to one of the preceding claims, **characterised in that** the corrosion-resistant filler is selected from kieselguhr, chalk and glass spheres.

7. A fibre-reinforced thermoplastic semi-finished product comprising
- a fibre-reinforced thermoplastic plastics-material part (1, 2) comprising at least one fibre-reinforced layer of a thermoplastic material, and
- at least one structure made of fibre-free thermoplastic plastics material (3),
wherein the structure made of fibre-free thermoplastic plastics material (3) is applied to the fibre-reinforced layer of the fibre-reinforced thermoplastic plastics-material part (1, 2) and is provided for joining a further fibre-reinforced thermoplastic plastics-material semi-finished product, and
- wherein the structure made of fibre-free thermoplastic plastics material (3) preferably has an average layer thickness D of 50 to 500 µm, especially of 100 to 300 µm, **characterised in that**
the structure made of fibre-free thermoplastic plastics material (3) contains at least one corrosion-resistant filler.

8. A fibre composite component comprising
- at least a first fibre-reinforced thermoplastic plastics-material part (1) and
- at least a second fibre-reinforced thermoplastic plastics-material part (2),
which are connected together via a structure made of fibre-free thermoplastic plastics material (3),
- wherein the structure made of fibre-free thermoplastic plastics material (3) preferably has an average layer thickness D of 5 to 100 µm, especially of 5 to 50 µm, **characterised in that**
the structure made of fibre-free thermoplastic plastics material (3) contains at least one corrosion-resistant filler.

9. A fibre composite component according to Claim 8, **characterised in that** the structure made of fibre-free thermoplastic plastics material (3) contains at least one electrically conductive filler, preferably selected from soot particles or metal particles, especially aluminium particles, and/or **in that** the corrosion-resistant filler is selected from kieselguhr, chalk and glass spheres.

10. Use of a structure made of fibre-free thermoplastic plastics material (3) for joining two or more fibre-reinforced thermoplastic plastics-material parts (1, 2) by means of welding, **characterised in that** the structure made of fibre-free thermoplastic plastics material (3) contains at least one corrosion-resistant filler.

## Revendications

1. Procédé d'assemblage de pièces en matériau synthétique thermoplastique renforcé par des fibres comprenant des étapes consistant à :
- préparer au moins une première pièce (1) en un matériau synthétique thermoplastique renforcé par des fibres et au moins une seconde pièce (2) en un matériau synthétique thermoplastique renforcé par des fibres,
- appliquer une structure en un matériau synthétique thermoplastique exempt de fibres (3) sur au moins une partie d'une zone destinée à l'assemblage de la première pièce (4) en un matériau synthétique thermoplastique renforcé par des fibres et/ou sur au moins une partie d'une zone destinée à l'assemblage de la seconde pièce (5) en un matériau synthétique thermoplastique renforcé par des fibres,
- souder les zones destinées à l'assemblage de la première et de la seconde pièces (4, 5) en un matériau synthétique thermoplastique renforcé par des fibres,
**caractérisé en ce que**
la structure en un matériau synthétique thermoplastique exempt de fibres (3) renferme au moins une charge résistant à la corrosion.

2. Procédé conforme à la revendication 1,
**caractérisé en ce que**
la structure en un matériau synthétique thermoplastique exempt de fibres (3) recouvre en totalité la zone destinée à l'assemblage de la première pièce (4) en un matériau synthétique thermoplastique renforcé par des fibres et/ou la zone destinée à l'assemblage de la seconde pièce (5) en un matériau synthétique thermoplastique renforcé par des fibres.

3. Procédé conforme à la revendication 1 ou 2,
**caractérisé en ce que**,
le soudage est mis en oeuvre sous la forme d'un soudage aux ultrasons d'un soudage par un élément chauffant, d'un soudage aux infrarouges, d'un soudage par vibrations ou d'un soudage par rayonnement laser.

4. Procédé conforme à l'une des revendications précédentes,
**caractérisé en ce que**
la structure en un matériau synthétique thermoplastique exempt de fibres (3) est appliquée sur la zone destinée à l'assemblage de la première pièce (4) en un matériau synthétique thermoplastique renforcé par des fibres et/ou sur la zone destinée à l'assemblage de la seconde pièce (5) en un matériau synthétique thermoplastique renforcé par des fibres par un procédé de pose de bandes, par empilage de fibres ou par couture.

5. Procédé conforme à l'une des revendications précédentes,
**caractérisé en ce que**
la structure en un matériau synthétique thermoplastique exempt de fibres (3) renferme au moins une charge électriquement conductrice de préférence choisie parmi des particules de noir de carbone ou des particules métalliques, en particulier des particules d'aluminium.

6. Procédé conforme à l'une des revendications précédentes,
**caractérisé en ce que**
la charge résistant à la corrosion est choisie parmi le Kieselguhr, la craie et les billes de verre.

7. Produit semi-fini thermoplastique renforcé par des fibres comprenant :
une pièce (1, 2) en un matériau thermoplastique renforcé par des fibres comprenant au moins une couche renforcée par des fibres d'un matériau synthétique thermoplastique, et
au moins une structure (3) en un matériau synthétique thermoplastique exempt de fibres,
la structure en un matériau synthétique thermoplastique exempt de fibres (3) étant appliquée sur la couche renforcée par des fibres de la pièce (1, 2) en un matériau synthétique thermoplastique renforcé par des fibres, et étant prévue pour permettre l'assemblage d'un autre produit semi-fini en un matériau synthétique thermoplastique renforcé par des fibres, et
la structure (3) en un matériau synthétique thermoplastique exempt de fibres ayant de préférence une épaisseur moyenne D de 50 à 500 µm, en particulier de 100 à 300 µm,
**caractérisé en ce que**
la structure (3) en un matériau synthétique thermoplastique exempt de fibres renferme au moins une charge résistant à la corrosion.

8. Elément composite à base de fibres comprenant :
au moins une première pièce (1) en un matériau synthétique thermoplastique renforcé par des fibres, et
au moins une seconde pièce (2) en un matériau thermoplastique renforcé par des fibres,
qui sont liées par l'intermédiaire d'une structure (3) en un matériau synthétique thermoplastique exempt de fibres,
la structure (3) en un matériau synthétique thermoplastique exempt de fibres ayant de préférence une épaisseur moyenne D de 5 à 100 µm en particulier de 5 à 50 µm,
**caractérisé en ce que**
la structure (3) en un matériau synthétique thermoplastique exempt de fibres renferme au moins une charge résistant à la corrosion.

9. Elément composite à base de fibres conforme à la revendication 8,
**caractérisé en ce que**
la structure (3) en un matériau synthétique thermoplastique exempt de fibres renferme au moins une charge électriquement conductrice, de préférence choisie parmi des particules de noir de carbone ou des particules métalliques, en particulier des particules d'aluminium, et/ou la charge résistant à la corrosion est choisie parmi du Kieselguhr, de la craie et des billes de verre.

10. Utilisation d'une structure (3) en un matériau synthétique thermoplastique exempt de fibres pour permettre l'assemblage d'au moins deux pièces (1, 2) en un matériau synthétique thermoplastique renforcé par des fibres par soudage,
**caractérisée en ce que**
la pièce (3) en un matériau synthétique thermoplastique exempt de fibres renferme au moins une charge résistant à la corrosion.
